# EUROPÄISCHE PATENTSCHRIFT

(11) **EP 3 507 849 B1**
(45) Veröffentlichungstag und Bekanntmachung des Hinweises auf die Patenterteilung: **23.12.2020**
(21) Anmeldenummer: 17771991.1
(22) Anmeldetag: 30.08.2017
(51) Int. Cl.: H01M 10/04, H01M 2/10, H01M 2/20, H01M 10/613, H01M 10/6555, H01M 10/643

(54) **BATTERIE MIT VERPRESSTER ZELLANORDNUNG**
BATTERY HAVING A PRESSED CELL ASSEMBLY
BATTERIE COMPRENANT UN ENSEMBLE D'ÉLÉMENTS COMPRIMÉS

(30) Priorität: 30.08.2016 DE 202016104759 U; 02.11.2016 DE 102016120841
(43) Veröffentlichungstag der Anmeldung: 10.07.2019
(73) Patentinhaber: E-Seven Systems Technology Management Ltd, Valletta, VLT 1455 (MT)
(72) Erfinder: KRÄMER, Thomas, STJ 3140 St. Julian's (MT)
(74) Vertreter: Cohausz & Florack
(86) Internationale Anmeldenummer: PCT/EP2017/071745
(87) Internationale Veröffentlichungsnummer: WO 2018/041883

(56) Entgegenhaltungen:
- EP-A2- 2 343 752
- WO-A1-2014/111233
- WO-A1-2015/036322
- DE-A1-102007 063 195
- DE-A1-102008 034 699
- US-A1- 2013 122 341

## Beschreibung

Die Erfindung betrifft eine Batterie mit einer Zellanordnung, wobei die Zellanordnung mehrere Batteriezellen aufweist, wobei die Zellanordnung mindestens zwei Batterieabschnitte aufweist und jeder Batterieabschnitt aus mehreren Batteriezellen besteht, wobei die Batteriezellen der Batterieabschnitte so ausgerichtet sind, dass Endanschlüsse der Batteriezellen des jeweiligen Batterieabschnitts in einer gemeinsamen ersten Kontaktierungsebene liegen und dass Endanschlüsse der Batteriezellen des jeweiligen Batterieabschnitts in einer gemeinsamen zweiten Kontaktierungsebene liegen, wobei die Batterieabschnitte benachbart zueinander angeordnet sind, wobei jeweils eine erste Kontaktierungsebene eines Batterieabschnitts einer zweiten Kontaktierungsebene eines benachbart angeordneten Batterieabschnitts zugewandt ist und wobei die Kontaktierungsebenen parallel zueinander ausgerichtet sind, wobei zwischen mindestens zwei aufeinanderfolgenden Batterieabschnitten eine zumindest teilweise elektrisch und thermisch leitfähige Verbindungsplatte mit einer ersten Seite und einer zweiten Seite angeordnet ist, die auf der ersten Seite und auf der zweiten Seite jeweils mindestens einen elektrisch und thermisch leitfähigen Kontaktierungsabschnitt aufweist, wobei die der ersten Seite dieser Verbindungsplatte zugewandten Endanschlüsse elektrisch und thermisch leitfähig mit dem mindestens einen Kontaktierungsabschnitt dieser ersten Seite verbunden sind und wobei die der zweiten Seite dieser Verbindungsplatte zugewandten Endanschlüsse elektrisch und thermisch leitfähig mit dem mindestens einen Kontaktierungsabschnitt dieser zweiten Seite verbunden sind, wobei Kontaktierungsabschnitte der Verbindungsplatte miteinander elektrisch und thermisch leitfähig über die Verbindungsplatte verbunden sind, und wobei durch die in den beiden äußeren Kontaktierungsebenen der Batterie liegenden Endanschlüsse ein Batterieanfangsbereich und ein Batterieendbereich definiert werden, wobei der Batterieanfangsbereich und der Batterieendbereich jeweils mit äußeren Verbindungsplatten verbunden sind.

Aus dem Stand der Technik sind Batterien mit übereinandergestapelten Batteriezellen und Verbindungsplatten bekannt, z.B. aus WO 2014/111233 A1, US 2013/122341 A1 und EP 2 343 752 A2.

Aus dem Stand der Technik sind Batterien bekannt, die eine Zellanordnung aufweisen, in der mehrere Batteriezellen vorgesehen sind. Dabei befinden sich jeweils mehrere Batteriezellen in einem Batterieabschnitt. Die erste und die zweite Kontaktierungsebene sind parallel zueinander ausgerichtet. Ferner ist in einer solchen Batterie mindestens eine Verbindungsplatte vorgesehen. Die mindestens eine Verbindungsplatte weist Kontaktierungsabschnitte auf und verbindet Paare oder Gruppen von Kontaktierungsabschnitten miteinander elektrisch und thermisch.

Bei einer solchen Batterie ist es jedoch ein ungelöstes Problem, wie sich deren einzelne Komponenten zusammenfügen lassen, sodass die Batterie einen stabilen Aufbau erhält. Es ist ferner erwünscht, einen möglichst guten elektrischen und thermischen Kontakt der Komponenten untereinander herzustellen, weil hierdurch eine Verteilung eines elektrischen Stroms und eines Wärmestroms durch die Batterie verbessert werden kann. Der vorliegenden Erfindung liegt deshalb die Aufgabe zugrunde, eine stabile Zellanordnung bereitzustellen, in der die Batteriezellen mit den Verbindungsplatten möglichst gut elektrisch und thermisch miteinander kontaktiert werden.

Die Aufgabe wird durch eine Batterie entsprechend dem Anspruch 1 gelöst. Die Batterie ist erfindungsgemäß so ausgebildet, dass an dem Batterieanfangsbereich und dem Batterieendbereich jeweils eine Druckplatte angeordnet ist, wobei die Druckplatten über Zugelemente miteinander verbunden sind und dadurch die an der mindestens einen Verbindungsplatte anliegenden Batteriezellen an die mindestens eine Verbindungsplatte angedrückt werden. Die Komponenten innerhalb der Zellanordnung werden hierdurch miteinander verpresst. Dabei üben die Druckplatten jeweils eine Anpresskraft auf die Batteriezellen aus. Die Druckplatte kann erfindungsgemäß die Anpresskraft an dem Batterieanfangsbereich beziehungsweise an dem Batterieendbereich direkt auf die Batteriezellen ausüben. So kann die Druckplatte unmittelbar an Endanschlüssen der Batteriezellen anliegen. Die Druckplatte kann die Anpresskraft an dem Batterieanfangsbereich beziehungsweise an dem Batterieendbereich alternativ jedoch auch indirekt auf die Batteriezellen ausüben. So kann zwischen der Druckplatte und den Batteriezellen erfindungsgemäß eine zusätzliche Schicht vorgesehen sein. Diese zusätzliche Schicht ist vorzugsweise elektrisch leitend ausgestaltet. Erfindungsgemäß kann die zusätzliche Schicht aber auch elektrisch nichtleitend ausgeführt sein. Vorteilhafterweise ist die zusätzliche Schicht elastisch ausgeführt.

Erfindungsgemäß können die Druckplatten flächig ausgebildet sein, es sind jedoch auch abweichende Bauformen möglich. Die Zugelemente sind jeweils mit den Druckplatten verbunden. Vorteilhafterweise besteht keine elektrisch leitende Verbindung zwischen den Batteriezellen und den Zugelementen bzw. weiteren stromführenden Komponenten der Batterie. Dabei sind die Zugelemente solchermaßen zwischen den Druckplatten verspannt, dass sie eine Zugkraft auf die Druckplatten ausüben. Bedingt durch die Zugkraft können die Druckplatten wiederum die bereits beschriebene Anpresskraft auf die Zellanordnung ausüben. Die Anpresskraft wird über alle Batterieabschnitte der Zellanordnung hinweg innerhalb der Batterie übertragen. Dadurch werden die Batteriezellen besonders gut mit der mindestens einen Verbindungsplatte innerhalb der Zellanordnung kontaktiert, denn durch eine hohe Anpresskraft wird eine Kontaktierungsfläche zwischen den Verbindungsplatten und Endanschlüssen der Batteriezellen vergrößert.

Die Zugelemente können als Stangen, als Rohre oder als sonstige längliche Elemente ausgebildet sein. Vorzugsweise sind die Stangen aus einem Metall, ganz besonders bevorzugt aus Stahl ausgeführt. Insbesondere bei Verwendung eines elektrisch leitenden Materials für die Zugelemente, besteht zwischen den Zugelementen und den Batteriezellen bzw. weiteren stromführenden Komponenten der Batterie vorteilhafterweise keine elektrisch leitende Verbindung. Die Stangen können alternativ jedoch auch aus einem besonders stabilen Kunststoff oder aus einem Verbundmaterial ausgeführt sein.

Der erfindungsgemäße Batterieaufbau trägt somit dazu bei, eine elektrischen Strom und einen Wärmestrom besonders gut innerhalb der Batterie zu verteilen. Ferner wird die Batterie durch den erfindungsgemäßen Aufbau in einem besonderen Maße stabilisiert, sodass sie auch starken mechanischen Belastungen widerstehen kann. Dies ist insbesondere dann von Vorteil, wenn eine Batterie solchen mechanischen Belastungen regelmäßig ausgesetzt ist. Dies trifft beispielsweise auf Batterien in Fahrzeugen zu. Hierdurch erschließt es sich, dass die erfindungsgemäße Batterie besonders gut für den Einsatz in Fahrzeugen geeignet ist.

Vorzugsweise weist jede Batteriezelle einen positiven und einen negativen Endanschluss auf und die Batteriezellen der Batterieabschnitte sind so ausgerichtet, dass sämtliche positiven Endanschlüsse der Batteriezellen des jeweiligen Batterieabschnitts in der ersten Kontaktierungsebene liegen und dass sämtliche negativen Endanschlüsse der Batteriezellen des jeweiligen Batterieabschnitts in der zweiten Kontaktierungsebene liegen, wobei die mit dem mindestens einen Kontaktierungsabschnitt der ersten Seite verbundenen Endanschlüsse untereinander über die Verbindungsplatte elektrisch und thermisch leitfähig miteinander verbunden sind, wobei die mit dem mindestens einen Kontaktierungsabschnitt der zweiten Seite verbundenen Endanschlüsse untereinander über die Verbindungsplatte elektrisch und thermisch leitfähig miteinander verbunden sind, und wobei die mit dem mindestens einen Kontaktierungsabschnitt der ersten Seite verbundenen Endanschlüsse elektrisch und thermisch leitfähig mit den mit dem mindestens einen Kontaktierungsabschnitt der zweiten Seite verbundenen Endanschlüssen über die Verbindungsplatte verbunden sind, sodass die Batteriezellen in einer elektrischen und thermischen Reihen- und Parallelschaltung elektrisch und thermisch leitfähig miteinander verbunden sind. Der Vorteil einer solchen Anordnung besteht darin, dass ein elektrischer Strom und ein thermischer Strom über die gesamte Zellanordnung verteilt werden können. Fällt eine Batteriezelle in einem Batterieabschnitt aus, so beeinträchtigt dies die Leistung der Batterie nur geringfügig, da in dem Batterieabschnitt noch weitere, funktionstüchtige Batteriezellen vorliegen. Vorzugsweise handelt es sich bei den Batteriezellen um Rundzellen. Bei diesen hat sich herausgestellt, dass sie besonders widerstandsfähig gegenüber mechanischen Belastungen sind. Unter einem positiven Endanschluss beziehungsweise einem negativen Endanschluss ist ein Pluspol beziehungsweise ein Minuspol einer Batteriezelle zu verstehen.

Vorzugsweise sind die Zugelemente senkrecht zu den Kontaktierungsebenen innerhalb einer die Batterieabschnitte umhüllenden Mantelfläche angeordnet, wobei die Mantelfläche alle Batteriezellen der Batterie umgibt und dabei den kleinstmöglichen Flächeninhalt aufweist. Dabei werden die Zugelemente durch Durchtrittsabschnitte innerhalb der umhüllenden Mantelfläche hindurchgeführt, in denen sich jeweils keine Batterie befindet. Die Durchtrittsabschnitte können sich durch eine besondere Anordnung der Batteriezellen in der Zellanordnung ergeben.

Gemäß einer möglichen Ausführungsform der Erfindung sind die Batteriezellen in den Batterieabschnitten in ersten und zweiten Zellebenen angeordnet, wobei die ersten und die zweiten Zellebenen alternierend innerhalb eines Batterieabschnitts angeordnet sind, wobei entlang jeder Zellebene mindestens zwei Batteriezellen angeordnet sind, wobei zwischen benachbarten Batteriezellen in der ersten Zellebene und benachbarten Batteriezellen in der zweiten Zellebene ein gleicher Abstand vorgegeben ist, wobei die Batteriezellen in der ersten Zellebene versetzt zu den Batteriezellen in der zweiten Zellebene angeordnet sind, und wobei die Batteriezellen in allen Batterieabschnitten gleichartig angeordnet sind, sodass innerhalb der Mantelfläche mindestens ein äußerer Durchtrittsabschnitt gebildet wird, durch den eines der Zugelemente hindurchgeführt ist. Die Batteriezellen in einer ersten Zellebene beziehungsweise in einer zweiten Zellebene können dabei voneinander beliebig beabstandet sein. Sie können so weit voneinander beabstandet sein, dass innere Durchtrittsabschnitte in der Zellanordnung vorliegen, durch die Zugelemente hindurchgeführt werden können.

Gemäß einer weiteren Ausführungsform der Erfindung liegen die Batteriezellen in Eckbereichen der Batterieabschnitte an zwei anderen Batteriezellen und in Randbereichen der Batterieabschnitte an drei anderen Batteriezellen an, wobei alle Batteriezellen, die nicht in einem Eckbereich oder einem Randbereich angeordnet sind, an sechs anderen Batteriezellen anliegen und wobei jeder Kontaktierungsabschnitt eine übereinstimmende Zellanordnung aufweist, sodass innerhalb der Mantelfläche mindestens ein äußerer Durchtrittsabschnitt gebildet wird, durch den eines der Zugelemente hindurchgeführt ist. Gemäß dieser Anordnung liegen die Batteriezellen seitlich direkt aneinander an, wodurch sie besonders gut miteinander gepackt sind. Es lässt sich somit in jedem Batterieabschnitt eine besonders große Zahl von Batteriezellen anordnen. Dabei ergeben sich äußere Durchtrittsabschnitte zwischen den Batteriezellen und einer die Batteriezellen umhüllenden Mantelfläche. Es ist auch möglich und erfindungsgemäß vorgesehen, dass die Batteriezellen in Randbereichen der Batterieabschnitte an vier anderen Batteriezellen anliegen.

Erfindungsgemäß kann innerhalb der Batterieabschnitte jeweils mindestens eine Batteriezelle entnommen sein, sodass innerhalb der Mantelfläche mindestens ein innerer Durchtrittsabschnitt gebildet wird, durch den eines der Zugelemente hindurchgeführt ist. Die Entnahme einer zusätzlichen Batteriezelle ist sowohl bei einer versetzten Anordnung der Batteriezellen als auch bei einer sonstigen Anordnung der Batteriezellen innerhalb der Batterie möglich. Hierdurch lässt sich zusätzlicher Raum innerhalb der Batterie gewinnen, der als Durchtrittsabschnitt dienen kann.

Erfindungsgemäß sind die Druckplatten als Metallplatten ausgebildet. Metallplatten sind ausreichend stabil, sodass über sie eine Zugkraft von den Zugelementen auf die Zellanordnung übertragen werden kann. Die Metallplatten können dabei in Abhängigkeit von einer gewünschten Zugkraft unterschiedlich dick ausgeführt sein. Wird eine hohe Zugkraft gewünscht, so muss die Metallplatte besonders dick ausgeführt sein. Vorzugsweise ist die Metallplatte 3 bis 20 mm dick ausgeführt, ganz besonders bevorzugt ist sie 5 mm dick ausgeführt. Die Metallplatten können erfindungsgemäß aus Kupfer, aus Aluminium oder aus einem sonstigen sehr gut wärmeleitfähigen Material ausgebildet sein. Alternativ ist es möglich, die Druckplatten nicht aus Metall auszuführen. So können die Druckplatten erfindungsgemäß aus einem harten Kunststoff ausgeführt sein.

Bevorzugt sind die Zugelemente durch Aussparungen in den Druckplatten hindurchgeführt, wobei die Zugelemente in den Aussparungen mit Hilfe von Muttern an den Druckplatten verschraubt sind. Eine Schraubverbindung erlaubt es, eine durch die Zugelemente auf die Druckplatten auszuübende Zugkraft genau einzustellen. Es sind erfindungsgemäß jedoch auch sonstige Festlegungsmittel verwendbar, um die Zugelemente an den Aussparungen so festzulegen, dass die Zugelemente eine Zugkraft auf die Druckplatten ausüben.

Vorzugsweise sind die Zugelemente solchermaßen mit den Druckplatten verbunden, dass auf jede Druckplatte durch die mit ihr verbundenen Zugelemente eine Druckkraft von mindestens 500 N in Richtung der Batterieabschnitte ausgeübt wird. Hierdurch werden die Batteriezellen und die Verbindungsplatten innerhalb der Batterie besonders gut strom- und wärmeleitend miteinander kontaktiert. Außerdem ist die Zellanordnung besonders stabil, wenn eine entsprechend hohe Zugkraft auf die Zellanordnung ausgeübt wird.

Bevorzugt weist mindestens eine Druckplatte Kühlrippen auf. Durch Kühlrippen wird eine Oberfläche der Druckplatten vergrößert, sodass die Druckplatten Wärme besser abführen können. Somit kann aus den Stirnseiten der Batterie Wärme aus der Zellanordnung über die Druckplatten in vorteilhafter Weise abgeführt werden. Kühlrippen eignen sich besonders dann, wenn die Druckplatten aus einem Metall wie Kupfer oder Aluminium ausgeführt ist.

Erfindungsgemäß können die Batteriezellen so angeordnet sein, dass erste Endanschlüsse einer Kontaktierungsebene eines ersten Batterieabschnitts unmittelbar gegenüberliegend zu zweiten Endanschlüssen einer Kontaktierungsebene eines zweiten Batterieabschnitts angeordnet sind, sodass sämtliche Batteriezellen eines Batterieabschnitts fluchtend mit Batteriezellen eines benachbarten Batterieabschnitts angeordnet sind. Somit sind Gruppen von Batteriezellen mehrerer Batterieabschnitte reihig zueinander angeordnet.

Vorzugsweise liegen positive Endanschlüsse eines Batterieabschnitts unmittelbar an negativen Endanschlüssen eines benachbarten Batterieabschnitts elektrisch und thermisch leitfähig an. Demgemäß sind zwei oder mehr Batteriezellen in Reihe geschaltet, ohne dass dabei direkt benachbarte Batteriezellen durch eine Verbindungsplatte voneinander separiert sind. Ein solcher Aufbau kann vorgesehen werden, wenn eine ausreichende Verteilung eines elektrischen Stroms und eines Wärmestroms innerhalb einer Batterie auch mit einer geringen Zahl von Verbindungsplatten innerhalb der Zellanordnung möglich ist. Ob dies der Fall ist, wird maßgeblich durch kapazitive und weitere Eigenschaften der Batteriezellen bestimmt.

Gemäß einer besonderen Ausführungsform der Erfindung ist in der Zellanordnung mindestens eine Positionierungsplatte angeordnet, durch die die Batteriezellen des Batterieabschnitts hindurchgeführt sind, wobei die Positionierungsplatte eine Aussparung aufweist, durch die die Batteriezellen hindurchgeführt sind, und wobei die Aussparung durch eine Hüllkurve um die Batteriezellen des Batterieabschnitts definiert wird, sodass die Aussparung die Batteriezellen formschlüssig umgreift, um die Batteriezellen innerhalb der Batterie zu positionieren und zu stabilisieren. Dabei berührt eine Randfläche der Aussparung nicht notwendigerweise alle Batteriezellen, die durch die Aussparung hindurchgeführt sind. Auch auf Batteriezellen, die nicht von einer Seitenfläche der Aussparung berührt werden, wird indirekt eine stabilisierende Wirkung durch benachbarte Batteriezellen ausgeübt, die unmittelbar an einer Seitenfläche der Aussparung anliegen. Die Positionierungsplatte kann aus Metall, Kunststoff, Holz oder einem sonstigen Material ausgeführt sein. Die Positionierungsplatte kann alternativ nicht bloß eine Aussparung, sondern eine zusammenhängende Fläche aufweisen, die mehrere Aussparungen aufweist, wobei durch jede Aussparung mindestens eine Batteriezelle hindurchgeführt ist, und wobei jede Aussparung durch eine Hüllkurve um die mindestens eine durch sie hindurchgeführte Batteriezelle definiert wird, sodass die Aussparung die mindestens eine Batteriezelle formschlüssig umgreift, um die mindestens eine Batteriezelle innerhalb der Batterie zu positionieren und zu stabilisieren.

Es ist vorteilhaft, wenn an jeder Verbindungsplatte beidseitig jeweils eine Positionierungsplatte angeordnet ist. Hierdurch werden die Batteriezellen in den Bereichen der Batterie besonders gut stabilisiert, in denen sie die Verbindungsplatte kontaktieren. Insbesondere, wenn die Verbindungsplatte besonders gestaltete Kontaktierungsbereiche aufweist, an denen diese zu kontaktieren ist, ist eine solche Anordnung der Positionierungsplatten vorteilhaft. Die positiven Endanschlüsse und die negativen Endanschlüsse können dann im Bereich der Verbindungsplatte besonders genau positioniert werden.

Vorzugsweise ist mindestens eine Verbindungsplatte thermisch leitfähig über ein Wärmeabfuhrelement mit einer Wärmesenke verbunden. Die Wärmesenke sollte sich dabei außerhalb der Batterie befinden, kann aber auch einen Teil der Batterie bilden. Durch ein entsprechend angeordnetes Wärmeabfuhrelement lässt sich ein Wärmestrom aus der Zellanordnung abführen.

Die Zellanordnung kann erfindungsgemäß von einem thermisch leitfähigen Gehäuse umschlossen sein. Da das Gehäuse thermisch leitfähig ist, eignet es sich dazu, als eine Wärmesenke Wärme aus der Zellanordnung aufzunehmen und optional an weitere Wärmesenken zu übertragen, mit denen es thermisch leitfähig verbunden ist. Das vorhergehend beschriebene Wärmeabfuhrelement kann mit dem Gehäuse thermisch leitfähig verbunden sein. Das Gehäuse ist vorzugsweise aus einem Metall gefertigt, besonders bevorzugt aus Eisen, Aluminium oder einer Metalllegierung. Ein solches Gehäuse ist dazu geeignet, die Zellanordnung vor äußeren Einwirkungen zu schützen. Das Gehäuse weist vorzugsweise zwei Öffnungen auf, auf welche die Druckplatten aufgesetzt werden. Das Gehäuse kann erfindungsgemäß längliche Aussparungen als Belüftungsschlitze aufweisen.

Die Verbindungsplatte kann erfindungsgemäß als eine Metallplatte ausgebildet sein. Dabei ist es besonders bevorzugt, wenn es sich bei der Metallplatte um eine Kupferplatte oder um eine Aluminiumplatte handelt. Metallplatten weisen eine hervorragende elektrische und thermische Leitfähigkeit auf. Eine Vielzahl von Batteriezellen lässt sich durch eine Metallplatte parallel und in Reihe schalten. Die Kontaktierungsabschnitte auf der Metallplatte müssen keine besondere Ausgestaltung aufweisen. Sie können erfindungsgemäß jedoch als Erhebungen ausgeführt sein oder Erhebungen aufweisen. Die Verbindungsplatte ist unabhängig von dem verwendeten Material vorzugsweise flächig ausgebildet.

Gemäß einer weiteren Ausführungsform der Erfindung ist die Verbindungsplatte als eine Platine ausgebildet, die teilweise aus einem nicht elektrisch leitfähigen Material ausgebildet ist, wobei die Verbindungsplatte auf einer ersten Seite und auf einer zweiten Seite jeweils mindestens einen elektrisch und thermisch leitfähigen Kontaktierungsabschnitt aufweist, und wobei jeder Kontaktierungsabschnitt mit jedem anderen Kontaktierungsabschnitt elektrisch und thermisch leitfähig verbunden ist. Eine solche Kontaktierungsplatine erlaubt es, eine elektrische und thermische Verbindung der Batteriezellen herzustellen. Auch bei einer als Platine ausgeführten Verbindungsplatte ist es besonders vorteilhaft, wenn die Batteriezellen der Batterie mit einer hohen Kraft an diese angedrückt werden, sodass eine besonders gut elektrisch und thermisch leitfähige Verbindung zwischen den Batteriezellen und der Verbindungsplatte entsteht.

Erfindungsgemäß kann in dem nicht elektrisch leitfähigen Material der Platine ein Kern aus einem vorzugsweise elektrisch und thermisch leitfähigen Material flächig angeordnet sein, wobei auf dem Kern abgewandten Seiten des nicht elektrisch leitfähigen Materials jeweils der mindestens eine Kontaktierungsabschnitt angeordnet ist, und wobei mindestens ein elektrisch und thermisch leitfähiges Durchführungselement sich durch den Kern und durch das auf dem Kern beidseitig angeordnete, nicht elektrisch leitfähige Material erstreckt, wobei das Durchführungselement gegenüber dem Kern elektrisch isoliert ist und elektrisch leitfähig mit dem mindestens einen Kontaktierungsabschnitt auf der ersten Seite und mit dem mindestens einen Kontaktierungsabschnitt auf der zweiten Seite verbunden ist, sodass eine elektrisch und thermisch leitfähige Verbindung der Kontaktierungsabschnitte auf der ersten Seite mit den Kontaktierungsabschnitten auf der zweiten Seite durch das Durchführungselement hergestellt wird und ein Wärmestrom durch den Kern aufgenommen und aus der Platine abgeführt werden kann. Somit können in einer Batterie mit einer solchen Platine nicht nur ein elektrischer Strom und ein Wärmestrom in der Zellanordnung der Batterie verteilt werden, sondern auch durch den Kern aufgenommen werden. Hierdurch wird es ermöglicht, den Wärmestrom aus der Platine und damit auch aus der Zellanordnung herauszuführen. Der Kern kann erfindungsgemäß aus der Platine herausgeführt und thermisch leitfähig mit einer Wärmesenke verbunden sein. Alternativ kann der thermisch leitfähige Kern mit einem Wärmeabfuhrelement verbunden sein, das thermisch leitfähig mit einer Wärmesenke verbunden ist.

Die Batterie kann ferner so ausgestaltet sein, dass auf der ersten Seite der darin vorgesehenen Platine mindestens zwei Kontaktierungsabschnitte und ein elektrisch und thermisch leitfähiger Verbindungsabschnitt angeordnet sind, der die Kontaktierungsabschnitte auf der ersten Seite elektrisch und thermisch leitfähig miteinander verbindet, dass jedem Kontaktierungsabschnitt auf der ersten Seite eine elektrische Sicherung zugeordnet ist und dass der Verbindungsabschnitt mit jedem Kontaktierungsabschnitt über eine diesem Kontaktierungsabschnitt zugeordnete elektrische Sicherung verbunden ist, wobei der Verbindungsabschnitt mit dem mindestens einen Kontaktierungsabschnitt auf der zweiten Seite durch das nichtleitende Material der Platine hindurch elektrisch leitfähig über ein elektrisch leitfähiges Durchführungselement verbunden ist, sodass jeder Kontaktierungsabschnitt auf der ersten Seite gegenüber jedem anderen Kontaktierungsabschnitt auf der ersten Seite der Platine und gegenüber jedem Kontaktierungsabschnitt auf der zweiten Seite der Platine durch mindestens eine elektrische Sicherung gesichert ist. Somit lassen sich die Batteriezellen gegenüber einander mittels der Platine elektrisch sichern. Dies ist insbesondere dann vorteilhaft, wenn ein Widerstand einer Batteriezelle aufgrund eines Fehlers zusammenbricht, sodass ein zu hoher Strom durch diese Batteriezelle fließt. In diesem Fall wird eine elektrische Sicherung ausgelöst, die einem Kontaktierungsabschnitt der Platine zugeordnet ist, der mit einem positiven oder mit einem negativen Endanschluss dieser Batteriezelle elektrisch und thermisch leitfähig verbunden ist. Dadurch wird diese fehlerhafte Batteriezelle von der Zellanordnung elektrisch isoliert.

Weitere Ausführungsformen der Erfindung sind in den Zeichnungen dargestellt. Dabei zeigt:
Fig. 1 eine schematische Darstellung einer Zellanordnung einer Batterie mit Druckplatten und Zugelementen,
Fig. 2 eine schematische Darstellung eines Abschnitts der Zellanordnung der Batterie gemäß Fig. 1 in einer Schnittansicht,
Fig. 3 eine schematische Darstellung einer als eine Platine ausgeführten Verbindungsplatte in einer Ansicht auf eine erste Seite der Verbindungsplatte,
Fig. 4 eine schematische Darstellung der Verbindungsplatte gemäß Fig. 3 in einer Ansicht auf eine zweite Seite der Verbindungsplatte,
Fig. 5 eine schematische Darstellung eines Querschnitts einer als Platine ausgeführten Verbindungsplatte mit einer Durchführungsaussparung,
Fig. 6 eine schematische Darstellung einer erfindungsgemäßen Batterie mit einem Gehäuse.

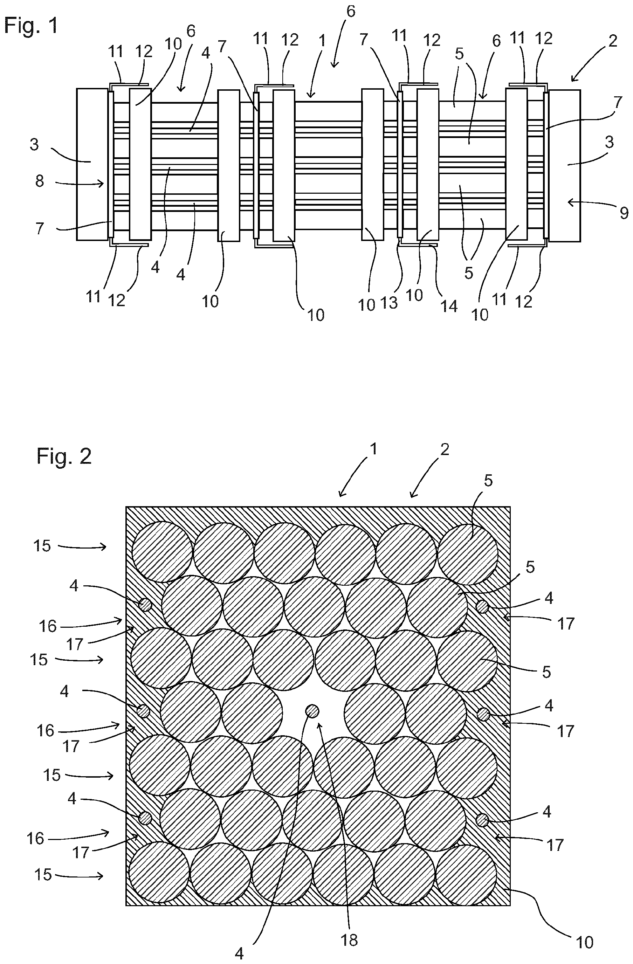

Fig. 1 zeigt eine schematische Darstellung einer Zellanordnung 1 einer Batterie 2 mit Druckplatten 3 und Zugelementen 4. In der Zellanordnung 2 sind mehrere Batteriezellen 5 jeweils in einem Batterieabschnitt 6 nebeneinander angeordnet. Die in einem Batterieabschnitt 6 angeordneten Batteriezellen 5 sind miteinander parallel verschaltet. Eine parallele Verschaltung der Batteriezellen 5 wird durch Verbindungsplatten 7 ermöglicht. Dafür sind Endanschlüsse der Batteriezellen 5 elektrisch und thermisch leitfähig mit den Verbindungsplatten 7 verbunden. Die Verbindungsplatten 7 sind jeweils zwischen zwei Batterieabschnitten 6 angeordnet. Jeder Batterieabschnitt 6 weist eine Höhe von sieben Batteriezellen 5 auf. Batteriezellen 5 benachbarter Batterieabschnitte 6 werden durch die zwischen ihnen angeordneten Verbindungsplatten 7 in Reihe geschaltet. Die Batteriezellen 5 in der Zellanordnung 1 sind somit sowohl parallel als seriell miteinander verschaltet.

Ein Batterieanfangsbereich 8 und ein Batterieendbereich 9 werden durch positive Endanschlüsse beziehungsweise durch negative Endanschlüsse von Batteriezellen 5 in der Batterie 2 gebildet. Der Batterieanfangsbereich 8 und der Batterieendbereich 9 sind mit äußeren Verbindungsplatten 7 verbunden. Die äußeren Verbindungsplatten 7 verbinden die Endanschlüsse der Batteriezellen 5 elektrisch und thermisch leitfähig. Auf einer dem Batterieanfangsbereich 8 beziehungsweise dem Batterieendbereich 9 abgewandten Seite der äußeren Verbindungsplatten 7 ist jeweils eine Druckplatte 3 angeordnet. Die Druckplatte 3 ist aus Kupfer ausgeführt. Somit ist sie besonders gut wärmeleitfähig. Die Druckplatten 3 sind mittels der Zugelemente 4 miteinander verbunden. Die Zugelemente 4 sind dabei solchermaßen mit den Druckplatten 3 verschraubt, dass sie eine Zugkraft auf die Druckplatten 3 ausüben. Dadurch wird die Zellanordnung 1 zusammengedrückt. Insbesondere werden die Batteriezellen 5 an die Verbindungsplatten 7 gedrückt. Hierdurch wird zwischen den Endanschlüssen der Batteriezellen 5 und den Verbindungsplatten 7 eine Kontaktfläche vergrößert, sodass ein elektrischer und ein thermischer Strom besser zwischen den Batteriezellen 5 und den Verbindungsplatten 7 fließen und damit auch besser über die gesamte Zellanordnung 1 verteilt werden können. Dies trägt dazu bei, dass lokale thermische Hotspots innerhalb der Batterie 2 vermieden werden. Ferner ist aufgrund der erfindungsgemäßen, durch die Zugelemente 4 und die Druckplatten 3 bewirkten Verpressung der Zellanordnung 1 die erfindungsgemäße Batterie 2 besonders widerstandsfähig gegenüber mechanischen Belastungen.

Um zu gewährleisten, dass die Batteriezellen 5 sicher innerhalb der Zellanordnung 1 gehalten werden, sind die Batteriezellen 5 durch mehrere Positionierungsplatten 10 umschlossen. Die Positionierungsplatten 10 umschließen die Batteriezellen 5 in den Batterieabschnitten 6 formschlüssig. Da an den Verbindungsplatten 7 eine exakte Kontaktierung der Endanschlüsse der Batteriezellen 5 mit den Verbindungsplatten 7 notwendig ist, sind die Positionierungsplatten 10 vorliegend in der Nähe der Verbindungsplatten 7 angeordnet.

Bei den Verbindungsplatten 7 handelt es sich um Platinen. Die Platinen weisen einen Kern 11 auf, der aus den Platinen seitlich herausgeführt ist. Außerhalb der Platine bildet der Kern 11 ein Wärmeabfuhrelement 12. Über das Wärmeabfuhrelement 12 kann Wärme aus der Zellanordnung 1 abgeführt werden. Das Wärmeabfuhrelement 12 weist einen ersten flächigen Abschnitt 13 auf, der in einer Ebene der Verbindungsplatte 7 liegt, sowie einen zweiten flächigen Abschnitt 14, der in einer weiteren Ebene liegt, die in einem rechten Winkel zu der Ebene der Verbindungsplatte 7 ausgerichtet ist. Der zweite flächige Abschnitt 14 ist dazu geeignet, mit einem Gehäuse (nicht gezeigt) oder mit einer Wärmesenke (nicht gezeigt) thermisch leitfähig verbunden zu werden, sodass ein Wärmestrom aus der Verbindungsplatte 7 auf das Gehäuse beziehungsweise auf die Wärmesenke abgeführt werden kann.

Fig. 2 zeigt eine schematische Darstellung eines Abschnitts der Zellanordnung 1 der Batterie 2 gemäß Fig. 1 in einer Schnittansicht. Dabei sind die Batteriezellen 5 in ersten Zellebenen 15 und zweiten Zellebenen 16 angeordnet. Die Batteriezellen 5 grenzen hierbei unmittelbar aneinander an. Die zweiten Zellebenen 16 weisen jeweils eine Batteriezelle 5 weniger auf als die ersten Zellebenen 15. Hierdurch ergeben sich äußere Durchtrittsabschnitte 17. Durch die äußeren Durchtrittsabschnitte 17 lassen sich Zugelemente 4 hindurchführen. Die äußeren Durchtrittsabschnitte 17 ermöglichen es, möglichst viele Batteriezellen 5 auf einer möglichst geringen Querschnittsfläche einer Zellanordnung 1 anzuordnen. So muss für die Durchführung eines Zugelements 4 in einem Randbereich eines Batterieabschnitts 6 nicht eine gesamte Batteriezelle 5 entfernt werden. Stattdessen wird lediglich aus einer zweiten Zellebene 16 eine Batteriezelle 5 entfernt. Durch die Entfernung der einen Batteriezelle 5 aus der zweiten Zellebene 16 entstehen zwei äußere Durchtrittsabschnitte 17. Durch jeden äußeren Durchtrittsabschnitt 17 können ein oder mehrere Zugelemente 4 hindurchgeführt werden. Vorliegend ist durch jeden äußeren Durchtrittsabschnitt 17 ein Zugelement 4 hindurchgeführt. Um eine gleichmäßige Stabilisierung der Zellanordnung 1 zu erreichen, ist vorliegend jedoch auch ein innerer Durchtrittsabschnitt 18 vorgesehen, in dem keine Batteriezelle 5 angeordnet ist. Durch den inneren Durchtrittsabschnitt 18 ist ein Zugelement 4 hindurchgeführt.

Die Batteriezellen 5 sind in dem Batterieabschnitt von einer Positionierungsplatte 10 umschlossen. In der Positionierungsplatte 10 sind Zugelementaussparungen 19 vorgesehen, durch die die Zugelemente 4 in den äußeren Durchtrittsabschnitten 17 und in dem inneren Durchtrittsabschnitt 18 hindurchgeführt sind.

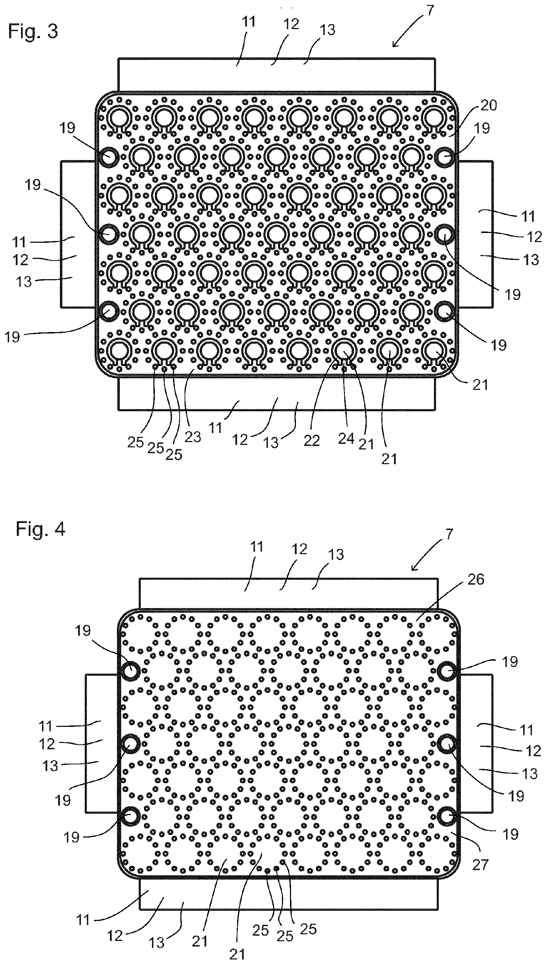

Fig. 3 zeigt eine schematische Darstellung einer als Platine ausgeführten Verbindungsplatte 7 in einer Ansicht auf eine erste Seite 20 der Verbindungsplatte 7. Es handelt sich vorliegend um eine Verbindungsplatte 7 für eine Zellanordnung mit in ersten Zellebenen und zweiten Zellebenen versetzt angeordneten Batteriezellen. Die Verbindungsplatte 7 ist hierbei für Zellanordnungen 1 mit sieben ersten und zweiten Zellebenen geeignet, wobei in den ersten und zweiten Zellebenen jeweils acht beziehungsweise sieben Batteriezellen 5 angeordnet sind. Die Verbindungsplatte 7 weist Zugelementaussparungen 19 auf, durch die Zugelemente hindurchgeführt werden können.

Die Verbindungsplatte 7 ist teilweise aus einem elektrisch nicht leitfähigen Material ausgebildet. Auf das nicht elektrisch leitfähige Material ist auf der ersten Seite der Verbindungsplatte 7 Kupfer als ein elektrisch und thermisch leitfähiges Material flächig aufgebracht. Das Kupfermaterial weist dabei mehrere Kontaktierungsabschnitte 21 auf. Diese sind zur Kontaktierung mit den Endanschlüssen der Batteriezellen 5 geeignet. Zu diesem Zweck sind die Kontaktierungsabschnitte 21 erhaben ausgeführt. Die Kontaktierungsabschnitte 21 sind durch Isolierungsabschnitte 22 aus einem nicht elektrisch leitfähigen Material von einem Verbindungsabschnitt 23 getrennt. Der Verbindungsabschnitt 23 ist flächig ausgebildet. Er verbindet die Kontaktierungsabschnitte 21 miteinander elektrisch und thermisch leitfähig. Durch jeden Isolierungsabschnitt 22 ist eine elektrisch und thermisch leitfähige Leiterbahn 24 hindurchgeführt, die als eine elektrische Sicherung dimensioniert ist. Durch die Sicherung bzw. die Leiterbahn 24 wird unter anderem vermieden, dass sich ein in einer Batteriezelle auftretender Kurzschluss auf die übrigen Batteriezellen derart auswirkt, dass diese zerstört werden.

Um jeden Isolierungsabschnitt 22 und damit auch um jeden Kontaktierungsabschnitt 21 sind mehrere Durchführungsaussparungen 25 kreisförmig angeordnet. In jeder Durchführungsaussparung 25 ist ein Durchführungselement (nicht gezeigt) angeordnet, das auf der Durchführungsaussparung 25 aufgebracht ist. Das Durchführungselement ist aus Kupfer ausgeführt und verbindet den Verbindungsabschnitt 23 der ersten Seite 20 der Verbindungsplatte 7 mit einer zweiten Seite (nicht gezeigt) der Verbindungsplatte 7 elektrisch und thermisch leitfähig. Ein aus einer Batteriezelle 5 in einen Kontaktierungsabschnitt 21 fließender Strom kann somit durch die Leiterbahn 24 und den Verbindungsabschnitt zu der zweiten Seite der Verbindungsplatte 7 geführt werden.

In der Verbindungsplatte 7 befindet sich ein Kern 11 aus Kupfer, der sich teilweise seitlich in Bereiche außerhalb der Verbindungsplatte 7 erstreckt. In diesen Bereichen außerhalb der Verbindungsplatte bildet der Kern 11 ein Wärmeabfuhrelement 12. Vorliegend sind vier Wärmeabfuhrelemente 12 mit jeweils einem ersten flächigen Abschnitt 13 dargestellt. An jedem Wärmeabfuhrelement 12 befindet sich auch ein zweiter flächiger Abschnitt 14, der jedoch aufgrund der gezeigten Perspektive nicht sichtbar ist. Auch auf einer der ersten Seite gegenüberliegenden zweiten Seite der Verbindungsplatte 7 sind die zuvor beschriebenen Zugelementaussparungen 19 sichtbar, durch die Zugelemente 4 hindurchgeführt werden können.

Fig. 4 zeigt eine schematische Darstellung der Verbindungsplatte 7 gemäß Fig. 3 in einer Ansicht auf eine zweite Seite 26 der Verbindungsplatte 7. Auf der zweiten Seite 26 der Verbindungsplatte 7 befindet sich eine als ein Verbindungs- und Kontaktierungsbereich 27 ausgebildete Kupferschicht. In dem Verbindungs- und Kontaktierungsbereich 27 sind Kontaktierungsabschnitte 21 angeordnet, die zur Kontaktierung mit Endanschlüssen von Batteriezellen 5 geeignet sind. Um jeden Kontaktierungsabschnitt 21 sind mehrere Durchführungsaussparungen 25 kreisförmig angeordnet. Die Durchführungsaussparungen 25 sind in der Verbindungsplatte 7 wie vorangehend beschrieben ausgebildet.

Vorliegend sind ferner die vier Wärmeabfuhrelemente 12 mit jeweils einem ersten flächigen Abschnitt 13 dargestellt. Auch auf der zweiten Seite der Verbindungsplatte 7 sind die Zugelementaussparungen 19 sichtbar, durch die Zugelemente 4 hindurchgeführt werden können.

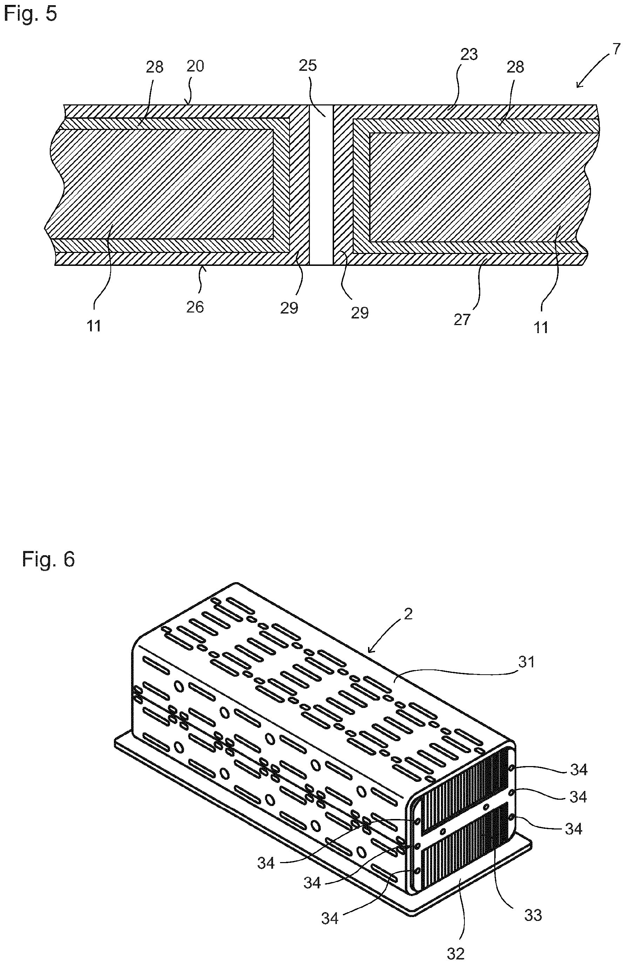

Fig. 5 zeigt eine schematische Darstellung eines Querschnitts einer als Platine ausgeführten Verbindungsplatte 7 mit einer Durchführungsaussparung 25. Die Verbindungsplatte 7 ist lediglich abschnittsweise dargestellt. Die Verbindungsplatte 7 weist ein elektrisch nicht leitfähiges Substratmaterial 28 auf. Das Substratmaterial 28 umschließt einen Kern 11 aus Kupfer. Auf einer ersten Seite 20 der Verbindungsplatte 7 bildet eine Kupferschicht einen Verbindungsabschnitt 23. Auf einer zweiten Seite 26 der Verbindungsplatte 7 bildet eine Kupferschicht einen Verbindungs- und Kontaktierungsbereich 27. Eine Durchführungsaussparung 25 ist durch die Verbindungsplatte 7 hindurchgeführt. Sie durchläuft dabei den Verbindungsabschnitt 23 und den Verbindungs- und Kontaktierungsbereich 27. Auf den Rand der Durchführungsaussparung 25 ist ein Durchführungselement 29 aus Kupfer flächig in einer dünnen Schicht aufgebracht. Das Durchführungselement 29 wird dabei durch das Substratmaterial 28 von dem Kern 11 elektrisch isoliert. Ein thermischer Strom kann jedoch das Substratmaterial 28 durchfließen und über den Kern 11 aus der Verbindungsplatte 7 abgeführt werden.

Fig. 6 zeigt eine schematische Darstellung einer erfindungsgemäßen Batterie 2 mit einem Gehäuse 31. Das Gehäuse 31 ist aus Eisen ausgeführt und umschließt eine erfindungsgemäße Zellanordnung 1 mit Verbindungsplatten 7. Dabei sind innerhalb des Gehäuses 31 Wärmeabfuhrelemente 12 mit dem Gehäuse 31 verbunden, sodass ein thermischer Strom aus der Zellanordnung 1 auf das Gehäuse 31 abgeführt werden kann. Das Gehäuse 31 ist fest mit einer Halteplatte 32 verbunden, die als Wärmesenke dient. Das Gehäuse 31 wird an zwei Stirnseiten durch Druckplatten 3 verschlossen. Die Druckplatten 3 weisen Kühlrippen 33 auf, sodass die Druckplatten 3 dazu beitragen, die Zellanordnung 1 innerhalb des Gehäuses 31 zu kühlen. Nicht gezeigte Zugelemente 4 sind durch die Druckplatten 3 hindurchgeführt und elektrisch isoliert mittels Muttern 34 mit den Druckplatten 3 verschraubt.

### BEZUGSZEICHENLISTE

- 1.: Zellanordnung
- 2.: Batterie
- 3.: Druckplatte
- 4.: Zugelement
- 5.: Batteriezelle
- 6.: Batterieabschnitt
- 7.: Verbindungsplatte
- 8.: Batterieanfangsbereich
- 9.: Batterieendbereich
- 10.: Positionierungsplatte
- 11.: Kern
- 12.: Wärmeabfuhrelement
- 13.: Erster flächiger Abschnitt des Wärmeabfuhrelements
- 14.: Zweiter flächiger Abschnitt des Wärmeabfuhrelements
- 15.: Erste Zellebene
- 16.: Zweite Zellebene
- 17.: Äußerer Durchtrittsabschnitt
- 18.: Innerer Durchtrittsabschnitt
- 19.: Zugelementaussparung
- 20.: Erste Seite der Verbindungsplatte
- 21.: Kontaktierungsabschnitt
- 22.: Isolierungsabschnitt
- 23.: Verbindungsabschnitt
- 24.: Leiterbahn
- 25.: Durchführungsaussparung
- 26.: Zweite Seite der Verbindungsplatte
- 27.: Verbindungs- und Kontaktierungsbereich
- 28.: Substratmaterial
- 29.: Durchführungselement
- 31.: Gehäuse
- 32.: Halteplatte
- 33.: Kühlrippen
- 34.: Mutter

## Patentansprüche

1. Batterie (2) mit einer Zellanordnung (1),
wobei die Zellanordnung (1) mehrere Batteriezellen (5) aufweist,
wobei die Zellanordnung (1) mindestens zwei Batterieabschnitte (6) aufweist und jeder Batterieabschnitt (6) aus mehreren Batteriezellen (5) besteht, wobei die Batteriezellen (5) der Batterieabschnitte (6) so ausgerichtet sind, dass Endanschlüsse der Batteriezellen (5) des jeweiligen Batterieabschnitts (6) in einer gemeinsamen ersten Kontaktierungsebene liegen und dass Endanschlüsse der Batteriezellen (5) des jeweiligen Batterieabschnitts (6) in einer gemeinsamen zweiten Kontaktierungsebene liegen,
wobei die Batterieabschnitte (6) benachbart zueinander angeordnet sind, wobei jeweils eine erste Kontaktierungsebene eines Batterieabschnitts (6) einer zweiten Kontaktierungsebene eines benachbart angeordneten Batterieabschnitts (6) zugewandt ist und wobei die Kontaktierungsebenen parallel zueinander ausgerichtet sind,
wobei zwischen mindestens zwei aufeinanderfolgenden Batterieabschnitten (6) eine zumindest teilweise elektrisch und thermisch leitfähige Verbindungsplatte (7) mit einer ersten Seite (20) und einer zweiten Seite (26) angeordnet ist, die auf der ersten Seite (20) und auf der zweiten Seite (26) jeweils mindestens einen elektrisch und thermisch leitfähigen Kontaktierungsabschnitt (21) aufweist, wobei die der ersten Seite (20) dieser Verbindungsplatte (7) zugewandten Endanschlüsse elektrisch und thermisch leitfähig mit dem mindestens einen Kontaktierungsabschnitt (21) dieser ersten Seite (20) verbunden sind und wobei die der zweiten Seite (26) dieser Verbindungsplatte (7) zugewandten Endanschlüsse elektrisch und thermisch leitfähig mit dem mindestens einen Kontaktierungsabschnitt (21) dieser zweiten Seite (26) verbunden sind, wobei Kontaktierungsabschnitte (21) der Verbindungsplatte (7) miteinander elektrisch und thermisch leitfähig über die Verbindungsplatte (7) verbunden sind, und
wobei durch die in den beiden äußeren Kontaktierungsebenen der Batterie (2) liegenden Endanschlüsse ein Batterieanfangsbereich (8) und ein Batterieendbereich (9) definiert werden,
wobei der Batterieanfangsbereich (8) und der Batterieendbereich (9) jeweils mit äußeren Verbindungsplatten (7) verbunden sind,
**dadurch gekennzeichnet, dass**
an dem Batterieanfangsbereich (8) und dem Batterieendbereich (9) jeweils eine Druckplatte (3) angeordnet ist, wobei auf einer dem Batterieanfangsbereich (8) beziehungsweise dem Batterieendbereich (9) abgewandten Seite der äußeren Verbindungsplatten (7) jeweils eine Druckplatte (3) angeordnet ist und die Druckplatten (3) als Metallplatten ausgebildet sind, wobei die Druckplatten (3) über Zugelemente (4) miteinander verbunden sind und dadurch die an der mindestens einen Verbindungsplatte (7) anliegenden Batteriezellen (5) an die mindestens eine Verbindungsplatte (7) andrücken.

2. Batterie nach Anspruch 1,
**dadurch gekennzeichnet, dass**
jede Batteriezelle (5) einen positiven und einen negativen Endanschluss aufweist und die Batteriezellen (5) der Batterieabschnitte (6) so ausgerichtet sind, dass sämtliche positiven Endanschlüsse der Batteriezellen (5) des jeweiligen Batterieabschnitts (6) in der ersten Kontaktierungsebene liegen und dass sämtliche negativen Endanschlüsse der Batteriezellen (5) des jeweiligen Batterieabschnitts (6) in der zweiten Kontaktierungsebene liegen,
wobei die mit dem mindestens einen Kontaktierungsabschnitt (21) der ersten Seite (20) verbundenen Endanschlüsse untereinander über die Verbindungsplatte (7) elektrisch und thermisch leitfähig miteinander verbunden sind, wobei die mit dem mindestens einen Kontaktierungsabschnitt (21) der zweiten Seite (26) verbundenen Endanschlüsse untereinander über die Verbindungsplatte (7) elektrisch und thermisch leitfähig miteinander verbunden sind, und wobei die mit dem mindestens einen Kontaktierungsabschnitt (21) der ersten Seite (20) verbundenen Endanschlüsse elektrisch und thermisch leitfähig mit den mit dem mindestens einen Kontaktierungsabschnitt (21) der zweiten Seite (26) verbundenen Endanschlüssen über die Verbindungsplatte (7) verbunden sind, sodass die Batteriezellen in einer elektrischen und thermischen Reihen- und Parallelschaltung elektrisch und thermisch leitfähig miteinander verbunden sind.

3. Batterie (2) nach einem der vorhergehenden Ansprüche,
**dadurch gekennzeichnet, dass**
die Zugelemente (4) senkrecht zu den Kontaktierungsebenen innerhalb einer die Batterieabschnitte (6) umhüllenden Mantelfläche angeordnet sind, wobei die Mantelfläche alle Batteriezellen (5) der Batterie (2) umgibt und dabei den kleinstmöglichen Flächeninhalt aufweist.

4. Batterie (2) nach Anspruch 3,
**dadurch gekennzeichnet, dass**
die Batteriezellen (5) in den Batterieabschnitten (6) in ersten und zweiten Zellebenen (15, 16) angeordnet sind, wobei die ersten und die zweiten Zellebenen (15, 16) alternierend innerhalb eines Batterieabschnitts (6) angeordnet sind, wobei entlang jeder Zellebene (15, 16) mindestens zwei Batteriezellen (5) angeordnet sind, wobei zwischen benachbarten Batteriezellen (5) in der ersten Zellebene (15) und benachbarten Batteriezellen (5) in der zweiten Zellebene (16) ein gleicher Abstand vorgegeben ist, wobei die Batteriezellen (5) in der ersten Zellebene (15) versetzt zu den Batteriezellen (5) in der zweiten Zellebene (16) angeordnet sind, und wobei die Batteriezellen (5) in allen Batterieabschnitten (6) gleichartig angeordnet sind, sodass innerhalb der Mantelfläche mindestens ein äußerer Durchtrittsabschnitt (17) gebildet wird, durch den eines der Zugelemente (4) hindurchgeführt ist.

5. Batterie (2) nach Anspruch 3,
**dadurch gekennzeichnet, dass**
die Batteriezellen (5) in Eckbereichen der Batterieabschnitte (6) an zwei anderen Batteriezellen (5) anliegen und in Randbereichen der Batterieabschnitte (6) an drei anderen Batteriezellen (5) anliegen und dass alle Batteriezellen (5), die nicht in einem Eckbereich oder einem Randbereich angeordnet sind, an sechs anderen Batteriezellen (5) anliegen und wobei jeder Kontaktierungsabschnitt (21) eine übereinstimmende Zellanordnung (1) aufweist, sodass innerhalb der Mantelfläche mindestens ein äußerer Durchtrittsabschnitt (17) gebildet wird, durch den eines der Zugelemente (4) hindurchgeführt ist.

6. Batterie (2) nach einem der Ansprüche 4 oder 5,
**dadurch gekennzeichnet, dass**
innerhalb der Batterieabschnitte (6) jeweils mindestens eine Batteriezelle (5) entnommen ist, sodass innerhalb der Mantelfläche mindestens ein innerer Durchtrittsabschnitt (18) gebildet wird, durch den eines der Zugelemente (4) hindurchgeführt ist.

7. Batterie (2) nach einem der vorhergehenden Ansprüche,
**dadurch gekennzeichnet, dass**
die Zugelemente (4) durch Aussparungen in den Druckplatten (3) hindurchgeführt sind, wobei die Zugelemente (4) in den Aussparungen verschraubt sind und/oder durch Muttern an den Druckplatten (3) verschraubt sind.

8. Batterie (2) nach einem der vorhergehende Ansprüche,
**dadurch gekennzeichnet, dass**
die Zugelemente (4) solchermaßen mit den Druckplatten (3) verbunden sind, dass auf jede Druckplatte (3) durch die mit ihr verbundenen Zugelemente (4) eine Druckkraft von mindestens 500 N in Richtung der Batterieabschnitte (6) ausgeübt wird.

9. Batterie (2) nach einem der vorhergehenden Ansprüche,
**dadurch gekennzeichnet, dass**
mindestens eine Druckplatte (3) Kühlrippen (33) aufweist.

10. Batterie (2) nach einem der vorhergehenden Ansprüche,
**dadurch gekennzeichnet, dass**
die Batteriezellen (5) so angeordnet sind, dass erste Endanschlüsse einer Kontaktierungsebene eines ersten Batterieabschnitts (6) unmittelbar gegenüberliegend zu zweiten Endanschlüssen einer Kontaktierungsebene eines zweiten Batterieabschnitts (6) angeordnet sind, sodass sämtliche Batteriezellen (5) eines Batterieabschnitts (6) fluchtend mit den Batteriezellen (5) eines benachbarten Batterieabschnitts (6) angeordnet sind.

11. Batterie (2) nach einem der vorhergehenden Ansprüche,
**dadurch gekennzeichnet, dass**
positive Endanschlüsse eines Batterieabschnitts (6) unmittelbar an negativen Endanschlüssen eines benachbarten Batterieabschnitts (6) elektrisch und thermisch leitfähig anliegen.

12. Batterie (2) nach einem der vorhergehenden Ansprüche,
**dadurch gekennzeichnet, dass**
in der Zellanordnung (1) mindestens eine Positionierungsplatte (10) angeordnet ist, durch die die Batteriezellen (5) des Batterieabschnitts (6) hindurchgeführt sind, wobei die Positionierungsplatte (10) eine Aussparung aufweist, durch die die Batteriezellen (5) hindurchgeführt sind, und dass die Aussparung durch eine Hüllkurve um die Batteriezellen (5) des Batterieabschnitts (6) definiert wird, sodass die Aussparung die Batteriezellen (5) formschlüssig umgreift, um die Batteriezellen (5) innerhalb der Batterie (2) zu positionieren und zu stabilisieren.

13. Batterie (2) nach einem der vorhergehenden Ansprüche,
**dadurch gekennzeichnet, dass**
mindestens eine Verbindungsplatte (7) thermisch leitfähig über ein Wärmeabfuhrelement (12) mit einer Wärmesenke verbunden ist.

14. Batterie (2) nach einem der vorhergehenden Ansprüche,
**dadurch gekennzeichnet, dass**
die Zellanordnung (1) von einem thermisch leitfähigen Gehäuse (31) umschlossen ist.

15. Batterie (2) nach Anspruch 13 und 14,
**dadurch gekennzeichnet, dass**
das Wärmeabfuhrelement (12) mit dem Gehäuse (31) verbunden ist.

16. Batterie (2) nach einem der vorhergehenden Ansprüche,
**dadurch gekennzeichnet, dass**
die Verbindungsplatten (7) als eine Metallplatte ausgebildet sind.

## Claims

1. Battery (2) with a cell assembly (1),
wherein the cell assembly (1) comprises a plurality of battery cells (5), wherein the cell assembly (1) comprises at least two battery sections (6) and each battery section (6) consists of a plurality of battery cells (5), wherein the battery cells (5) of the battery sections (6) are aligned such that end terminals of the battery cells (5) of the respective battery section (6) lie in a common first contacting plane and that end terminals of the battery cells (5) of the respective battery section (6) lie in a common second contacting plane,
wherein the battery sections (6) are arranged adjacent to one another, wherein in each case a first contacting plane of a battery section (6) faces a second contacting plane of an adjacently arranged battery section (6) and wherein the contacting planes are aligned parallel to one another, wherein an at least partially electrically and thermally conductive connecting plate having a first side (20) and a second side (26) is arranged between at least two successive battery sections (6), which on the first side (20) and on the second side (26) each has at least one electrically and thermally conductive contacting section (21), wherein the end terminals facing the first side (20) of this connecting plate (7) are electrically and thermally conductively connected to the at least one contacting section (21) of this first side (20) and wherein the end terminals facing the second side (26) of this connecting plate (7) are electrically and thermally conductively connected to the at least one contacting section (21) of this second side (26),
wherein contacting sections (21) of the connecting plate (7) are connected to one another in an electrically and thermally conductive manner via the connecting plate (7), and
wherein a battery start region (8) and a battery end region (9) are defined by the end terminals lying in the two outer contacting planes of the battery (2), wherein the battery start region (8) and the battery end region (9) are each connected to outer connecting plates (7),
**characterised in that**
a pressure plate (3) is in each case arranged at the battery start region (8) and the battery end region (9), wherein a pressure plate (3) is in each case arranged on a side of the outer connecting plates (7) facing away from the battery start region (8) or rather the battery end region (9), and the pressure plates (3) being designed as metal plates, wherein the pressure plates (3) are connected to one another via tension elements (4) and thereby press the battery cells (5) bearing against the at least one connecting plate (7) against the at least one connecting plate (7).

2. Battery according to claim 1,
**characterised in that**
each battery cell (5) has a positive and a negative end terminal and the battery cells (5) of the battery sections (6) are aligned in such a way that all positive end terminals of the battery cells (5) of the respective battery section (6) lie in the first contacting plane and that all negative end terminals of the battery cells (5) of the respective battery section (6) lie in the second contacting plane, wherein the end terminals connected to the at least one contacting section (21) of the first side (20) are electrically and thermally conductively connected to one another via the connecting plate (7), wherein the end terminals connected to the at least one contacting section (21) of the second side (26) are electrically and thermally conductively connected to each other via the connecting plate (7), and wherein the end terminals connected to the at least one contacting section (21) of the first side (20) are electrically and thermally conductively connected to the end terminals connected to the at least one contacting section (21) of the second side (26) via the connecting plate (7), so that the battery cells are electrically and thermally conductively connected to each other in an electrical and thermal series and parallel connection.

3. Battery (2) according to one of the previous claims,
**characterised in that**
the tension elements (4) are arranged perpendicularly to the contacting planes within a casing surface enclosing the battery sections (6), wherein the casing surface surrounding all the battery cells (5) of the battery (2) and thereby having the smallest possible surface area.

4. Battery (2) according to claim 3,
**characterised in that**
the battery cells (5) in the battery sections (6) are arranged in first and second cell planes (15, 16), in which the first and second cell planes (15, 16) being arranged alternately within a battery section (6), at least two battery cells (5) being arranged along each cell plane (15, 16), in which an equal distance being predetermined between adjacent battery cells (5) in the first cell plane (15) and adjacent battery cells (5) in the second cell plane (16), wherein the battery cells (5) in the first cell plane (15) are arranged offset with respect to the battery cells (5) in the second cell plane (16), and wherein the battery cells (5) are arranged identically in all battery sections (6), so that at least one outer passage section (17) is formed within the casing surface, through which one of the tension elements (4) is passed.

5. Battery (2) according to claim 3,
**characterised in that**
the battery cells (5) lie against two other battery cells (5) in corner regions of the battery sections (6) and lie against three other battery cells (5) in edge regions of the battery sections (6), and **in that** all the battery cells (5) which are not arranged in a corner region or an edge region, lie against six other battery cells (5) and wherein each contacting section (21) has a matching cell arrangement (1) so that within the casing surface at least one outer passage section (17) is formed through which one of the tension elements (4) is passed.

6. Battery (2) according to one of claims 4 or 5,
**characterised in that**
at least one battery cell (5) is removed within each of the battery sections (6), so that at least one inner passage section (18) is formed within the casing surface, through which one of the tension elements (4) is passed.

7. Battery (2) according to one of the previous claims,
**characterised in that**
the tension elements (4) are passed through recesses in the pressure plates (3), in which the tension elements (4) being screwed into the recesses and/or being screwed to the pressure plates (3) by nuts.

8. Battery (2) according to one of the previous claims,
**characterised in that**
the tension elements (4) are connected to the pressure plates (3) in such a way that a compressive force of at least 500 N is exerted on each pressure plate (3) in the direction of the battery sections (6) by the tension elements (4) connected thereto.

9. Battery (2) according to one of the previous claims,
**characterised in that**
at least one pressure plate (3) has cooling fins (33).

10. Battery (2) according to one of the previous claims,
**characterised in that**
said battery cells (5) are arranged such that first end terminals of a contacting plane of a first battery section (6) are arranged immediately opposite to second end terminals of a contacting plane of a second battery section (6), so that all battery cells (5) of one battery section (6) are arranged in alignment with the battery cells (5) of an adjacent battery section (6).

11. Battery (2) according to one of the previous claims,
**characterised in that**
positive end terminals of a battery section (6) are in direct electrical and thermal contact with negative end terminals of an adjacent battery section (6).

12. Battery (2) according to one of the previous claims,
**characterised in that**
at least one positioning plate (10) is arranged in the cell assembly (1) through which the battery cells (5) of the battery section (6) are passed, wherein the positioning plate (10) has a recess through which the battery cells (5) are passed, and that the recess is defined by an envelope around the battery cells (5) of the battery section (6) so that the recess positively engages around the battery cells (5) to position and stabilize the battery cells (5) within the battery (2).

13. Battery (2) according to one of the previous claims,
**characterised in that**
at least one connecting plate (7) is thermally conductively connected to a heat sink via a heat dissipation element (12).

14. Battery (2) according to one of the previous claims,
**characterised in that**
the cell assembly (1) is enclosed by a thermally conductive housing (31).

15. Battery (2) according to claim 13 and 14,
**characterised in that**
the heat dissipation element (12) is connected to the housing (31).

16. Battery (2) according to one of the previous claims,
**characterised in that**
the connecting plates (7) are formed as a metal plate.

## Revendications

1. Batterie (2) avec un arrangement de cellules (1),
dans lequel l'arrangement de cellules (1) comprend une pluralité de cellules de batterie (5),
dans lequel l'arrangement de cellules (1) comprend au moins deux sections de batterie (6) et chaque section de batterie (6) est constituée d'une pluralité de cellules de batterie (5),
dans lequel les cellules de batterie (5) des sections de batterie (6) sont alignées de telle sorte que les bornes d'extrémité des cellules de batterie (5) de la section de batterie(6) respective se trouvent dans un premier plan de contact commun et que les bornes d'extrémité des cellules de batterie (5) de la section de batterie (6) respective se trouvent dans un deuxième plan de contact commun,
dans lequel les sections de batterie (6) sont disposées les unes à côté des autres, dans lequel un premier plan de contact d'une section de batterie (6) est à chaque fois tourné vers un deuxième plan de contact d'une section de batterie (6) disposée à côté et dans lequel les plans de contact sont orientés parallèlement les uns aux autres,
dans lequel une plaque de connexion (7) au moins partiellement conductrice de l'électricité et de la chaleur, présentant un premier côté (20) et un deuxième côté (26), est disposée entre au moins deux sections de batterie (6) successives, qui présente sur le premier côté (20) et sur le deuxième côté (26) respectivement au moins une section de contact (21) électriquement et thermiquement conductrice, dans lequel les bornes d'extrémité orientées vers le premier côté (20) de cette plaque de connexion (7) étant reliées de manière électriquement et thermiquement conductrice à la au moins une section de contact (21) de ce premier côté (20) et les bornes d'extrémité orientées vers le deuxième côté (26) de cette plaque de connexion (7) étant reliées de manière électriquement et thermiquement conductrice à la au moins une section de contact (21) de ce deuxième côté (26),
dans lequel des sections de contact (21) de la plaque de connexion (7) sont reliées entre elles de manière électriquement et thermiquement conductrice par l'intermédiaire de la plaque de connexion (7), et
dans lequel une zone de début de batterie (8) et une zone de fin de batterie (9) sont définies par les bornes d'extrémité situées dans les deux plans de contact extérieurs de la batterie (2),
dans lequel la zone de début de batterie (8) et la zone de fin de batterie (9) sont chacune reliées à des plaques de connexion extérieures (7),
**caractérisé en ce qu'**
une plaque de pression (3) est disposée à chaque fois dans la zone de début de batterie (8) et dans la zone de fin de batterie (9), dans lequel une plaque de pression (3) étant disposée à chaque fois sur un côté des plaques de connexion extérieures (7) opposé à la zone de début de batterie (8) ou à la zone de fin de batterie (9), et les plaques de pression (3) étant réalisées sous forme de plaques métalliques, dans lequel les plaques de pression (3) sont reliées entre elles par des éléments de tension (4) et pressent ainsi les cellules de batterie (5) qui s'appuient sur la au moins une plaque de connexion (7) contre la au moins une plaque de connexion (7).

2. Batterie selon la revendication 1,
**caractérisé en ce que**
chaque cellule de batterie (5) présente une borne d'extrémité positive et une borne d'extrémité négative et les cellules de batterie (5) des sections de batterie (6) sont orientés de telle sorte que toutes les bornes d'extrémité positives des cellules de batterie (5) de la section de batterie (6) respective se trouvent dans le premier plan de contact et que toutes les bornes d'extrémité négatives des cellules de batterie (5) de la section de batterie (6) respective se trouvent dans le deuxième plan de contact, dans lequel les bornes d'extrémité reliées à la au moins une section de contact (21) du premier côté (20) étant reliées entre elles de manière électriquement et thermiquement conductrice par l'intermédiaire de la plaque de connexion (7), dans lequel les bornes d'extrémité reliées à la au moins une section de contact (21) du deuxième côté (26) sont reliées entre elles de manière électriquement et thermiquement conductrice par l'intermédiaire de la plaque de connexion (7), et dans lequel les bornes d'extrémité reliées à la au moins une section de contact (21) du premier côté (20) sont reliées de manière électriquement et thermiquement conductrice aux bornes d'extrémité reliées à la au moins une section de contact (21) du deuxième côté (26) par l'intermédiaire de la plaque de connexion (7), de sorte que les cellules de batterie sont reliés entre eux de manière électriquement et thermiquement conductrice dans un montage électrique et thermique en série et en parallèle.

3. Batterie (2) selon l'une des revendications précédentes,
**caractérisé en ce que**
les éléments de tension (4) sont disposés perpendiculairement aux plans de contact à l'intérieur d'une surface enveloppante entourant les sections de batterie (6), dans lequel la surface enveloppante entourant tous les cellules de batterie (5) de la batterie (2) et ayant ainsi la plus petite superficie possible.

4. Batterie (2) selon la revendication 3,
**caractérisé en ce que**
les cellules de batterie (5) sont disposées dans les sections de batterie (6) dans des premier et deuxième plans de cellule (15, 16), dans lequel les premier et deuxième plans de cellule (15, 16) étant disposés alternativement dans une section de batterie (6), dans lequel au moins deux cellules de batterie (5) étant disposées le long de chaque plan de cellule (15, 16), dans lequel une distance égale étant prédéterminée entre les cellules de batterie (5) adjacentes dans le premier plan de cellule (15) et les cellules de batterie (5) adjacentes dans le deuxième plan de cellule (16), dans lequel les cellules de batterie (5) dans le premier plan de cellules (15) sont disposés de manière décalée par rapport aux cellules de batterie (5) dans le deuxième plan de cellules (16), et dans lequel les cellules de batterie (5) sont disposés de manière identique dans toutes les sections de batterie (6), de sorte qu'au moins une section de passage extérieure (17) est formée dans la surface enveloppante, à travers laquelle l'un des éléments de tension (4) est passé.

5. Batterie (2) selon la revendication 3,
**caractérisé en ce que**
les cellules de batterie (5) reposent contre deux autres cellules de batterie (5) dans des zones d'angle des sections de batterie (6) et reposent contre trois autres cellules de batterie (5) dans des zones de bord des sections de batterie (6), et **en ce que** tous les cellules de batterie (5) qui ne sont pas disposés dans une zone d'angle ou une zone de bord, reposent contre six autres cellules de batterie (5) et dans lequel chaque section de contact (21) a un arrangement de cellule (1) correspondant de sorte que dans la surface enveloppante au moins une section de passage extérieure (17) est formée à travers laquelle un des éléments de tension (4) est passé.

6. Batterie (2) selon l'une des revendications 4 ou 5,
**caractérisé en ce qu'**
au moins un cellules de batterie (5) est retiré dans chacune des sections de batterie (6), de sorte qu'au moins une section de passage intérieure (18) est formée dans la surface enveloppante, à travers laquelle un des éléments de tension (4) est passé.

7. Batterie (2) selon l'une des revendications précédentes,
**caractérisé en ce que**
les éléments de tension (4) sont passés à travers des cavités dans les plaques de pression (3), dans lequel les éléments de tension (4) étant vissés dans les cavités et/ou étant vissés aux plaques de pression (3) par des écrous.

8. Batterie (2) selon l'une des revendications précédentes,
**caractérisé en ce que**
les éléments de tension (4) sont reliés aux plaques de pression (3) de telle manière qu'une force de compression d'au moins 500 N est exercée sur chaque plaque de pression (3) en direction des sections de batterie (6) par les éléments de tension (4) qui y sont reliés.

9. Batterie (2) selon l'une des revendications précédentes,
**caractérisé en ce qu'**
au moins une plaque de pression (3) est munie d'ailettes de refroidissement (33).

10. Batterie (2) selon l'une des revendications précédentes,
**caractérisé en ce que**
les cellules de batterie (5) sont disposés de telle sorte que les premières bornes d'extrémité d'un plan de contact d'une première section de batterie (6) sont disposées immédiatement à l'opposé des secondes bornes d'extrémité d'un plan de contact d'une seconde section de batterie (6), de sorte que tous les cellules de batterie (5) d'une section de batterie (6) sont disposés en alignement avec les cellules de batterie (5) d'une section de batterie (6) adjacente.

11. Batterie (2) selon l'une des revendications précédentes,
**caractérisé en ce que**
les bornes d'extrémité positives d'une section de batterie (6) reposent directement électriquement et thermiquement conductrices contre les bornes d'extrémité négatives d'une section de batterie (6) adjacente.

12. Batterie (2) selon l'une des revendications précédentes,
**caractérisé en ce qu'**
au moins une plaque de positionnement (10) est disposée dans l'arrangement de la cellule (1) à travers lequel les cellules de batterie (5) de la section de batterie (6) sont passés, dans lequel la plaque de positionnement (10) a une cavité à travers laquelle les cellules de batterie (5) sont passés, et que la cavité est défini par une enveloppe autour des cellules de batterie (5) de la section de batterie (6) de sorte que la cavité s'engage positivement autour des cellules de batterie (5) pour positionner et stabiliser les cellules de batterie (5) dans la batterie (2).

13. Batterie (2) selon l'une des revendications précédentes,
**caractérisé en ce qu'**
au moins une plaque de connexion (7) est reliée de manière thermiquement conductrice à un dissipateur de chaleur par l'intermédiaire d'un élément de dissipation de chaleur (12).

14. Batterie (2) selon l'une des revendications précédentes,
**caractérisé en ce que**
l'arrangement de la cellule (1) est entouré d'un boîtier (31) thermiquement conductrice.

15. Batterie (2) selon la revendication 13 et 14,
**caractérisé en ce que**
l'élément de dissipation de la chaleur (12) est relié au boîtier (31).

16. Batterie (2) selon l'une des revendications précédentes,
**caractérisé en ce que**
les plaques de connexion (7) sont formées comme une plaque métallique.
